(19) Europäisches Patentamt / European Patent Office / Office européen des brevets

(11) **EP 1 856 552 B1**

(12) **FASCICULE DE BREVET EUROPEEN**

(45) Date de publication et mention de la délivrance du brevet:
**23.04.2014 Bulletin 2014/17**

(21) Numéro de dépôt: **06724866.6**

(22) Date de dépôt: **22.02.2006**

(51) Int Cl.:
*G01S 7/495* (2006.01)    *F41G 7/22* (2006.01)

(86) Numéro de dépôt international:
**PCT/EP2006/060191**

(87) Numéro de publication internationale:
**WO 2006/089916 (31.08.2006 Gazette 2006/35)**

(54) **DISPOSITIF DE CONTRE-MESURE ET DE POURSUITE D'UNE MENACE SOUS LA FORME D'UN MISSILE A AUTODIRECTEUR**

GEGENMASSNAHMEVORRICHTUNG ZUR BEDROHUNGSVERFOLGUNG IN FORM EINES ZIELSUCHKOPFFLUGKÖRPER

DEVICE FOR COUNTERING AND TRACKING A THREAT IN THE FORM OF A HOMING-HEAD MISSILE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.02.2005 FR 0501833**

(43) Date de publication de la demande:
**21.11.2007 Bulletin 2007/47**

(73) Titulaire: **Sagem Défense Sécurité**
**92100 Boulogne-Billancourt (FR)**

(72) Inventeurs:
• **ARAGONES, Julien**
  **F-92160 Antony (FR)**
• **DUFRESNE DE VIREL, François**
  **F-75013 Paris (FR)**
• **ROBINEAU, Jacques**
  **F-91620 La Ville du Bois (FR)**

(74) Mandataire: **Regimbeau**
**20, rue de Chazelles**
**75847 Paris Cedex 17 (FR)**

(56) Documents cités:
FR-A- 2 535 467    FR-A- 2 821 929
US-A- 5 206 502    US-B1- 6 410 897

**Description**

DOMAINE TECHNIQUE GENERAL

La présente invention concerne un dispositif amélioré de poursuite d'une menace et de contres mesures dirigées.

Plus précisément, elle concerne un dispositif de poursuite et de contre mesure d'une menace sous la forme d'un missile à autodirecteur à infra rouge (ADIR).

ETAT DE L'ART

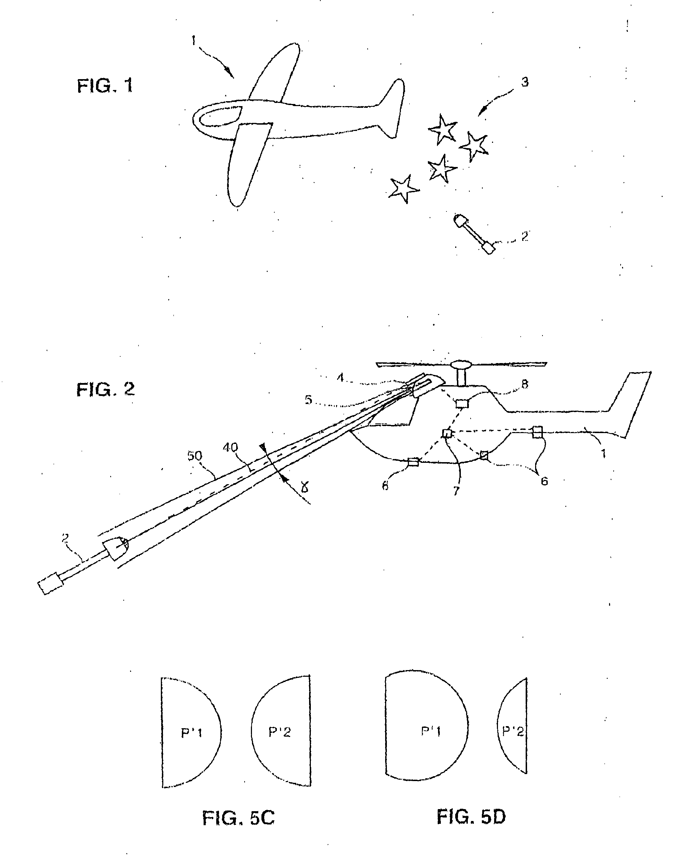

La figure 1 représente schématiquement un dispositif connu de contre-mesure pyrotechnique 3 protégeant par exemple un aéronef 1 d'une menace 2. La menace 2 se présente sous la forme d'un missile à autodirecteur à infrarouge (ADIR).

Le dispositif 3 est un leurre pyrotechnique générant des rayonnements infrarouges lorsqu'il est mis à feu hors de l'aéronef 1, quand ce dernier a détecté la menace 2. Le rayonnement infrarouge généré par le leurre 3, qui est plus intense que le rayonnement infrarouge généré par l'aéronef 1, engendre une déviation de la trajectoire de la menace 2 par perturbation du système autodirecteur de guidage du missile. La menace 2 se dirige vers le leurre 3 plutôt que vers l'aéronef 1.

Les dispositifs de leurre pyrotechnique comportent cependant des inconvénients.

Ils sont tout d'abord onéreux de conception. De plus, ils représentent un risque d'incendie à l'intérieur de l'aéronef en cas de dysfonctionnement. En outre, en cas de fausse alarme, ils compromettent fortement la furtivité de l'aéronef 1. Enfin, ils n'existent qu'en quantité imitée à bord de l'aéronef, ce qui ne permet plus de protéger l'aéronef lorsque ceux-ci ont été épuisés au cours de la mission. Ainsi, ils représentent des dispositifs consommables qu'il faut remplacer régulièrement et sont fortement spécialisés à un type de menace.

Par conséquent, les dispositifs actuels de contre-mesure sont généralement des brouilleurs par éclairement infrarouge.

La figure 2 représente schématiquement un dispositif connu de contre-mesure infrarouge directionnelle (DIRCM - «Directional IntraRed Counter-Measures»).

L'aéronef 1 comporte ainsi un dispositif de détection de départ de missiles (MWS - « Missile Warning System ») sous la forme d'une pluralité de détecteurs 6 montés sur la carlingue de l'aéronef 1. Les détecteurs 6 détectent le lancement d'un missile 2, poursuivent la trajectoire du missile et l'identifient comme une menace pour l'aéronef 1.

Un dispositif de contrôle 7 du dispositif de détection de départ transmet les données concernant la trajectoire du missile 2 au dispositif de contrôle 8 d'un système de contre-mesure directionnelle.

Le système de contrôle 8 met alors en route le dispositif de poursuite 4. qui poursuit le missile et détermine sa direction dans l'espace. Le dispositif de poursuite détecte l'autodirecteur du missile 2 en utilisant, par exemple, l'effet « oeil de chat ». Le plan focal de l'autodirecteur est en général un plan à fort coefficient de réflexion et également refroidi, tout en étant placé au foyer de l'optique permettant de focaliser sur ce plan de détection les signaux utiles pour le guidage du missile. Cela a pour conséquence, en cas d'éclairement de l'autodirecteur, de renvoyer vers la source d'éclairage un signal fort (comme ceux réémis par les yeux d'un chat lorsqu'ils sont éclairés par les phares d'une voiture, d'où le terme utilisé) et/ou dans le cas d'une détection thermique d'avoir un objet froid et étendu, correspondant à la surface de détection de l'autodirecteur, objet facilement détectable par une caméra infrarouge. Ce problème est connu par l'homme de l'art sous la désignation de détection d'optique pointée.

Pour pouvoir poursuivre le missile 2, le dispositif de poursuite 4 peut, s'il est muni d'une caméra thermique, détecter l'image froide produite par l'autodirecteur et s'asservir en position sur celle-ci. Le dispositif de poursuite 4. peut aussi émettre en direction de l'autodirecteur du missile 2 un faisceau de lumière 40 et utilise le signal obtenu en retour pour faire cet asservissement en direction.

Le dispositif de contrôle 8 dirige également un faisceau de lumière 50 de brouillage ayant une ouverture angulaire $\gamma$ et produit par une source de lumière infrarouge 5. La source lumineuse 5 utilise généralement des lampes infrarouges à décharges, dont le spectre a des longueurs d'onde couvrant un large domaine spectral, depuis le visible jusqu'à l'infrarouge lointain. Une fois que la poursuite est correctement effectuée et que le missile est dans le faisceau de la source lumineuse 5, l'éclairement infrarouge 50 est envoyé vers l'autodirecteur du missile 2 selon une séquence spécifique afin d'effectuer un brouillage du missile 2, de sorte qu'il ne représente plus une menace pour l'aéronef 1. Le signal de brouillage 50 peut être le même que le signal de poursuite 40.

Les sources lumineuses 5 à décharges présentent de nombreux inconvénients.

De par l'étalement de la source lumineuse, la concentration du faisceau requiert un dispositif optique volumineux (grande pupille, grande focale) qui est très encombrant et lourd. Les brouilleurs à base de lampe à décharges sont donc difficilement embarquables à bord des aéronefs. De plus, la puissance lumineuse disponible n'est pas très importante, ce qui limite fortement l'efficacité de tels brouilleurs utilisant des lampes à décharges.

Ainsi, avec l'évolution de la technologie, il est maintenant possible d'obtenir des sources laser infrarouges émettant des longueurs d'onde comprises entre 3 et 5 micromètres. Cette évolution de la technologie permet de prévoir une amélioration intéressante des dispositifs de poursuite et de contre-mesure. En effet, avec une source laser, il est possible d'augmenter sensiblement l'intensité du faisceau 50 et/ou 40 avec une source bien plus petite qu'une source à décharge et plus proche de la limite de diffraction. Du fait que la source laser est une source cohérente, toute l'énergie du faisceau est concentrée sur une seule longueur d'onde.

L'augmentation de la puissance du faisceau sur une ou plusieurs longueurs d'onde données présente des avantages.

Un faisceau laser permet de déposer un éclairement plus important que celui des lampes à décharges en entrée de pupille de l'autodirecteur de la menace.

L'énergie laser peut être contenue dans plusieurs raies (typiquement deux ou trois) pour pouvoir éclairer efficacement tous les types d'autodirecteurs de missiles.

Du fait de ses propriétés optiques (forte luminance, faible divergence), le laser est tout à fait adapté à ce type de dispositif. Pour réduire encore cette divergence et obtenir un bilan de portée acceptable pour les fonctions de poursuite active, d'identification AD et de brouillage du DIRCM, une optique dite de collimation peut être utilisée. Cette optique de type afocal a pour fonction de réduire la divergence selon son rapport de grossissement, et dans un même temps d'augmenter la section du faisceau dans un rapport inverse.

Un faisceau laser peut être réfléchi dans une plus grande mesure par la « tête chercheuse », de sorte que l'identification du missile 2 - notamment par la modulation qu'il introduit sur le faisceau laser réfléchi - est facilitée. Une bonne identification de la menace 2 permet d'envoyer un bon code de brouillage, c'est à dire un code vraiment adapté au type de missile 2. La source est très directive, ce qui augmente la furtivité générale de l'aéronef, Un tel dispositif est divulgué dans FR 2535467.

Les dispositifs de poursuite et de contre-mesure utilisant une source laser présentent cependant des inconvénients.

Du fait de la faible divergence du rayon laser produit par la source laser (en général moins de 1 milliradian), le dispositif de poursuite 4 doit être capable de poursuivre très précisément le détecteur infrarouge du missile 2.

De plus, la caractéristique de cohérence des sources laser impose l'utilisation d'un dispositif de mise en forme, d'orientation et de stabilisation de faisceau qui ne génère pas d'interférences qui auraient des conséquences néfastes sur le fonctionnement général du système et particulièrement sur l'efficacité de brouillage de l'autodirecteur du missile.

Il est donc très difficile de concevoir un dispositif de poursuite et de contre-mesure qui puisse suivre rapidement et simplement le missile dans le cas de l'utilisation d'une source infrarouge laser.

PRESENTATION DE L'INVENTION

L'invention propose de pallier au moins un de ces inconvénients.

A cet effet, l'invention propose un dispositif de contre-mesure et de poursuite d'une menace sous la forme d'un missile à autodirecteur, comportant une tête d'orientation apte à recevoir un faisceau lumineux cohérent incident et à le dévier pour produire un faisceau transmis, caractérisé en ce que la tête d'orientation comporte un biprisme comportant deux prismes dans des matériaux différents et apte à diviser le faisceau transmis en deux sous faisceaux, la différence d'indice de réfraction entre les prismes étant apte à introduire une différence de chemin optique entre les deux sous faisceaux qui est supérieure à la longueur de cohérence du faisceau incident, de façon à rendre les deux sous faisceaux non cohérents entre eux et empêcher ainsi toute interférence entre ces deux sous faisceaux.

L'invention est avantageusement complétée par les caractéristiques suivantes, prises seules ou en une quelconque de leur combinaison techniquement possible :

- les prismes ont une base triangle isocèle rectangle ;
- la différence d'indice de réfraction entre les prismes est sensiblement supérieure à 1 ;
- le couple de matériaux pour les prismes est choisi parmi les couples Silicium - ZnS ou Silicium - Saphir ou Germanium - ZnS ou Germanium - ZnSe ou Germanium - CdTe ou Germanium - Saphir ;
- la différence de coefficient de dilatation thermique entre les prismes est inférieure à 0.02 ;
- le biprisme est monté en rotation en site autour d'un axe perpendiculaire à sa base et passant par son centre géométrique ;
- le biprisme est monté sur un support mobile en rotation autour de l'axe de rotation en site dans une fourche ;
- la tête est montée en rotation en gisement autour d'un axe parallèle à la base du biprisme et passant par le centre géométrique du biprisme ;
- un capot de protection du biprisme est monté mobile en rotation en gisement ; et
- le dispositif comporte une source laser infrarouge de longueur de cohérence de l'ordre de grandeur du centimètre.

L'invention présente de nombreux avantages.

L.es dispositifs 4 de poursuite et 5 de contre-mesure de l'art antérieur peuvent être fusionnés dans l'invention. Avec une seule source laser, on peut effectuer la poursuite est la contre-mesure, grâce à la puissance du faisceau. La source lumineuse est unique et de petite dimension. Un dispositif selon l'invention est très compact, ce qui augmente la furtivité du dispositif et de l'ensemble sur lequel il est monté.

L'invention résout le problème d'interférences dues à l'utilisation conjointe d'une source lumineuse cohérente et d'une tête d'orientation comportant un biprisme générant des chemins optiques différents pour des rayons d'un faisceau laser le traversant. La tête d'orientation est compatible avec des sources laser à faible longueur de cohérence (typiquement quelques centimètres).

La tête d'orientation engendre très peu de pertes de puissance laser.

La tête d'orientation est très simple de réalisation et d'ulilisation. Il y a peu ou pas de réglages nécessaires.

Elle ne comporte pas d'angle mort, et permet notamment une visée zénithale. Elle couvre un espace d'orientation au moins égal à $2\pi$ stéradians.

De plus, la disposition mécanique de la tête d'orientation est symétrique autour de ses axes d'utilisation. Le centre de gravité de la tête est donc situé sur les axes d'utilisation. La tête peut donc davantage résister aux vibrations d'une structure sur laquelle est elle montée. La tête n'engendre pas elle-même de vibrations ni de déstabilisation de la ligne de visée.

Enfin, le déplacement de la tête est très rapide grâce à des inerties réduites et une motorisation appropriée. Le dispositif de contre-mesure selon l'invention ne nécessite pas de motorisation autre que celle permettant le déplacement du biprisme.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un dispositif connu de contre-mesure pyrotechnique ;
- la figure 2, déjà commentée, représente un dispositif connu de l'art antérieur permettant la poursuite d'une part et la contre-mesure d'autre part d'une menace sous la forme d'un missile à autodirecteur à infrarouge ;
- les figures 3A et 3B représentent schématiquement le trajet de rayons optiques à l'intérieur d'une tête d'orientation selon l'invention ;
- la figure 4 représente schématiquement la génération d'une différence de marche entre deux rayons optiques traversant une tête d'orientation selon l'invention ;
- les figures 5A à 5D représentent les sous pupilles dans les orientations de la tête correspondant aux figures 3A et 3B ;
- la figure 6 représente schématiquement une vue en coupe d'un mode de réalisation possible d'une tête d'orientation selon l'invention ;
- la figure 7 représente schématiquement une vue en perspective et en éclaté d'un mode de réalisation d'une tête d'orientation selon l'invention ;
- la figure 8 représente schématiquement le montage de deux dispositifs de poursuite et de contre-mesure selon l'invention sur un aéronef 1 ; et
- la figure 9 représente schématiquement le trajet de deux rayons lumineux dans un prisme, en fonction de l'indice de réfraction du prisme et de leur angle d'incidence sur le prisme.

Sur l'ensemble des figures, les éléments similaires portent des références numériques identiques.

DESCRIPTION DETAILLEE

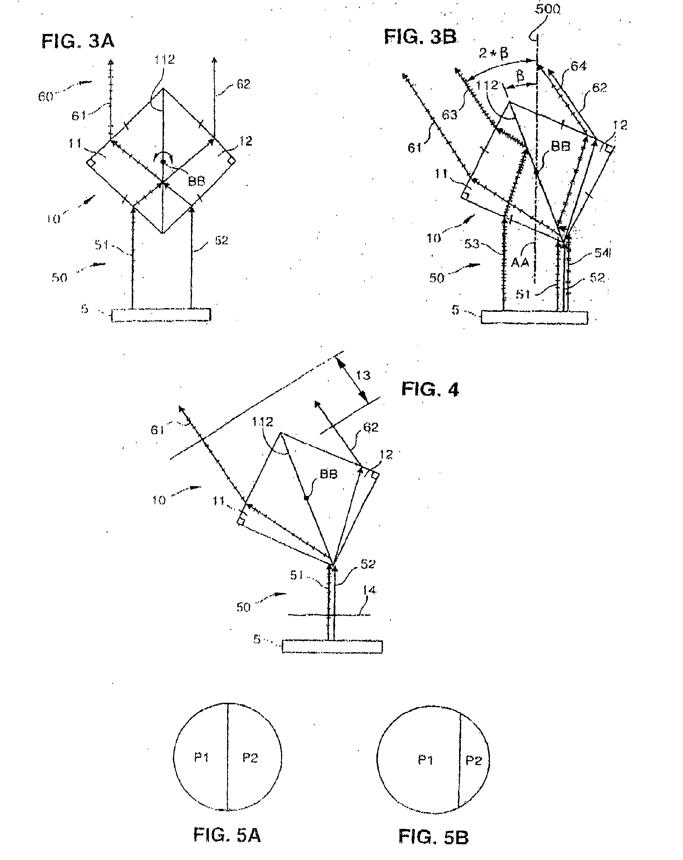

Les figures 3A et 3B montrent qu'un dispositif amélioré de contre-mesure et de poursuite d'une menace selon l'invention comporte une tête d'orientation d'un faisceau laser incident 50 issu d'une source laser 5.

Dans la suite de la présente description, on présente pour des raisons de clarté un seul sens de trajet des rayons lumineux. D'après le principe de retour inverse de la lumière, on comprend que les rayons peuvent se déplacer dans le sens inverse de celui présenté, et que la tête d'orientation peut donc servir à la fois à la poursuite et à la contre-mesure de la menace.

La source laser 5 est préférentiellement une source laser infrarouge. Avantageusement, la source laser 5 est à longueur de cohérence relativement faible (typiquement quelques centimètres).

La tête d'orientation est apte à recevoir le faisceau 50 lumineux incident et à le dévier pour produire un faisceau 60 transmis.

A cet effet, la tête comporte principalement deux prismes 11 et 12 formant un biprisme 10. Les prismes 11 et 12 ont une base formant un triangle rectangle et isocèle. Ils sont accolés l'un à l'autre sur une face 112 issue de l'hypoténuse de leur base formant triangle rectangle. Le biprisme 10 forme donc un cube.

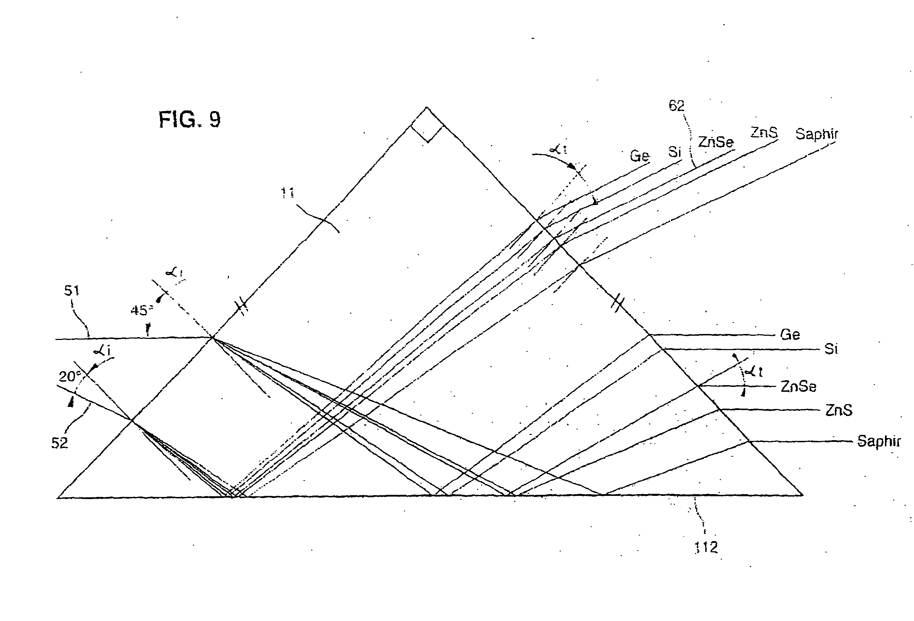

La figure 9 montre plus précisément le trajet de rayons lumineux 51 et 52 au travers d'un prisme 11 par exemple pour donner des rayons transmis 61 et 62 respectivement. Le fait que chaque prisme ait une base isocèle assure que l'angle $\alpha t$ pour le rayon transmis 61 soit égal à l'angle $\alpha i$ pour le rayon incident 51, de même que l'angle $\alpha i$ pour le rayon transmis 62 soit égal à l'angle $\alpha i$ pour le rayon incident 52. Le fait que la base soit rectangle assure d'une part la symétrie pour les deux prismes 11 et 12 et d'autre part qu'un ensemble de rayons parallèles incidents sur le biprisme ressorte du biprisme parallèlement.

La face 112 sépare le biprisme 10 en deux parties égales et forme un dioptre réfléchissant les rayons du faisceau laser 50 incident puis passant dans les prismes 11 et 12. La figure 3A montre le trajet de deux rayons incidents 51 et 52 dans le biprisme 10. On constate que les rayons 51 et 52 sont réfléchis totalement par la face 112. Les rayons 51 et 52 sont transmis et référencés par 61 et 62 respectivement après le biprisme 10. L'hypoténuse est de même longueur pour les deux prismes, afin d'éviter les réflexions et les pertes de faisceau utile sur la face 112 pour certaines orientations du biprisme, comme on le verra dans la suite de la présente description.

La face 112 doit être réfléchissante pour les deux prismes. Cela peut être obtenu de deux manières différentes.

La première manière est d'écarter, mais suffisamment légèrement, les deux prismes l'un de l'autre, de façon à ce que l'on respecte les conditions de réflexion totale ($n.\sin(\alpha i) \geq 1$) et qu'on n'empêche pas la réflexion à cause de la présence de l'autre prisme (on parle alors de déflexion totale frustrée ou d'effet tunnel optique). Elle présente l'avantage de la simplicité, une absence de sensibilité aux dégradations de traitement (puis qu'il n'y en a pas) et un montage plus facile du biprisme (on n'a pas de contraintes sur les coefficients de dilatation thermique des deux matériaux comme on le voit plus loin dans la présente description). Elle a l'inconvénient de devoir écarter les prismes et donc d'avoir une zone non utile au centre du faisceau optique.

La deuxième manière est de coller les prismes ensemble. Il est alors nécessaire de déposer sur chaque face de prisme un traitement réfléchissant fonctionnant pour les longueurs d'ondes considérées. Elle présente beaucoup moins de problème d'occultation centrale. Par contre, elle a les inconvénients d'une dégradation possible du traitement réfléchissant et les contraintes sur les coefficients de dilation des deux prismes (en cas de collage). On peut aussi envisager un montage des prismes juste plaqués l'un sur l'autre, et pouvant donc glisser l'un par rapport, à l'autre en cas de variation thermique. On peut également envisager l'utilisation d'une lame fine d'un matériau de bas indice, comme le verre par exemple, avec par exemple comme couple de matériaux Si et Ge$_r$ les deux primes étant plaqués sur la lame fine, le bas indice du matériau étant compatible des conditions de réflexion totale à l'intérieur des deux prismes 11 et 12.

Le biprisme 10 est monté en rotation autour d'un axe de rotation BB perpendiculaire à la base du biprisme, à savoir perpendiculaire au plan des figures 3A et 3B, et passant par le centre géométrique du biprisme. L'axe BB permet la rotation du biprisme 10 dans le plan des figures 3A et 3B, est donc l'orientation du faisceau 60 en site.

La figure 3B montre qu'une rotation d'un angle $\beta$ du biprisme autour de l'axe BB permet une rotation du faisceau transmis 60 d'un angle de $2\beta$. La figure 3B montre à cet effet le trajet de quatre rayons incidents 51, 52, 53 et 54, les rayons 61, 62, 63 et 64 étant les rayons transmis. Avec une rotation du biprisme 10 d'une valeur d'au moins 45° de chaque côté de l'axe optique 500, la tête peut couvrir un angle en site au moins égal à 180°.

La figure 4 montre que la rotation du biprisme 10 autour de l'axe BB entraîne une avance de phase due à la différence 13 de marche optique entre les deux rayons 61 et 62 transmis par les prismes 11 et 12 respectivement. La différence de marche 13 est comptée par rapport à la référence de phase 14 en amont du biprisme 10 sur les rayons incidents 51 et 52.

Par ailleurs, les figures 5A à 5D montant que le biprisme divise le faisceau 60 transmis en deux sous faisceaux. La pupille de sortie du dispositif de contre-mesure est scindée en deux parties, l'une passant dans le prisme 11 (pupille P1), l'autre passant dans le prisme 12 (pupille P2). Les figures 5A et 5C correspondant à la situation de la figure 3A, les figures 5B et 5D correspondent à la situation de la figure 3B. Les figures 5A et 5B montrent ainsi que les deux sous pupilles entrantes P1 et P2 varient en fonction notamment de l'angle d'orientation 11 du biprisme 10. Les figures 5C et 5D montrent que chaque prisme a pour effet d'inverser la pupille et de la décaler, de manière différente pour chaque angle d'incidence induisant une modification du sens des sous pupilles P'1 et P'2 de sortie.

Si les deux prismes 11 et 12 sont dans une même matériau, la différence de marche 13 induit des interférences entre les rayons 61 et 62. De telles interférences sont très gênantes pour la poursuite et la contre-mesure des menaces. Les zones sombres des interférences peuvent en effet conduire à des zones de non détection de la menace et/ou à des zones de non brouillage. De plus, le fait que la différence de marche varie lors de l'utilisation de la tête, notamment en fonction de l'angle d'orientation du biprisme, rend encore la poursuite et la contre-mesure des menaces plus délicates.

Par conséquent, il faut rendre les deux sous parties du faisceau 60 incohérentes entres elles de façon à éviter les interférences entre les deux parties des rayons sortant du biprisme.

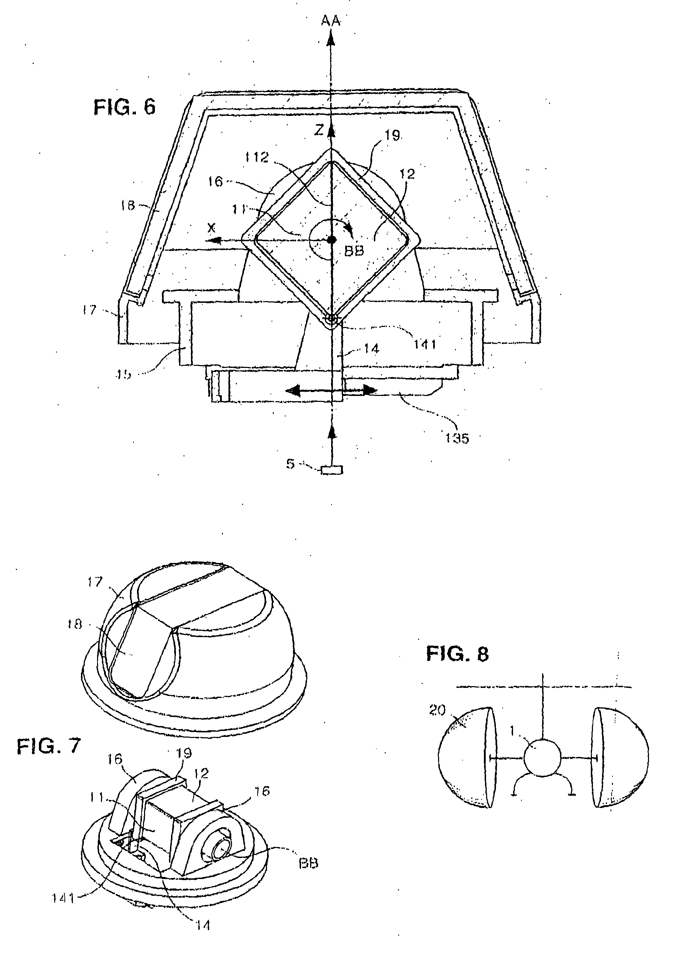

Pour cela, la figure 6 montre que les deux prismes 11 et 12 de la tête d'orientation sont dans des matériaux ayant des indices de diffraction différents, ce qui permet de rendre différents les chemins optiques des rayons traversant le prisme 11 et le prisme 12. La différence important (et par conséquent très supérieure à la longueur de cohérence de la lumière utilisée) de chemin optique rend les deux sous parties du faisceau 60 incohérentes entres elles.

Le retard de chemin optique introduit par la différence d'indices des matériaux des prismes 11 et 12 est au moins supérieure à la longueur de cohérence de la source laser 5 dans toutes les postions utiles du biprisme.

Le choix du couple de matériaux satisfait préférentiellement plusieurs besoins.

Premièrement, la différence des indices des matériaux doit induire une différence de chemin optique suffisant pour assurer l'incohérence des deux sous faisceaux à tous les angles d'utilisation de la tête d'orientation. La différence de chemin optique due aux indices des matériaux doit être supérieure à la somme d'une part de fa longueur de cohérence de la source laser et d'autre part de l'avance de chemin optique entre les deux pupilles. La valeur du supplément de chemin optique induit par la différence d'indices est supérieure à ladite somme dans le pire cas d'utilisation de la tête. De cette manière, l'incohérence des deux sous faisceaux en sortie de tête d'orientation est assurée, quelle que soit la position angulaire du faisceau transmis défléchi.

Deuxièmement, préférentiellement le couple de matériaux est choisi de sorte que les matériaux agent sensiblement des coefficients de dilatation thermique relativement proches l'un de l'autre. Cette contrainte n'est véritablement importante qu'en cas de collage d'un prisme sur l'autre. En effet, pour des applications dans le domaine militaire, le dispositif doit être utilisable de -40°C à +70°C, voire -54°C à +85°C (pour tenir compte du stockage possible). Si les prismes 11 et 12 se dilatent de façon trop différente, le bon fonctionnement du biprisme - et par conséquent de la tête d'orientation - s'en trouvera altéré.

On rappelle que préférentiellement la source 5 laser présente une longueur de cohérence, typiquement égale à quelques centimètres.

Si on appelle ΔL la différence de marche entre un faisceau traversant un prisme par rapport à un faisceau traversant un autre prisme, on a donc au premier ordre la relation :

$$\Delta L, \propto \Delta n \text{ pour une dimension du biprisme donnée.}$$

Il faut que :

$$\Delta L \geq L_c$$

où $L_c$ est la longueur de cohérence de la source laser.

Les matériaux utilisables dans l'infrarouge ont une gamme d'indice très variée. On pleut ainsi choisir un couple de matériaux avec un matériau présentant un indice fort et un matériau présentant un indice faible.

La gamme des matériaux utilisables est assez vaste et permet de choisir un couple optimal en fonction des données réelles du problème. Le tableau 1 regroupe quelques exemples des principaux matériaux avec les valeurs de leur indice de réfraction pour une longueur d'onde de 4 $\mu$m.

Tableau 1

| Matériau | Ge | Si | ZnSe | KrS$_5$ | Diamant | ZnS | AgCl | Csl | PbF$_2$ |
|---|---|---|---|---|---|---|---|---|---|
| Indice | 4,03 | 3,42 | 2,43 | 2,38 | 2,38 | 2,25 | 2 | 1,74 | 1,72 |
| Matériau | MgO | Saphir | CsBr | KBr | NaCl | KCl | CaF$_2$ | KrS$_6$ | MgF$_2$ |
| Indice | 1,71 | 1,67 | 1,67 | 1,54 | 1,52 | 1,47 | 1,41 | 1,38 | 1,35 |

On rappelle que la figure 9 représente schématiquement le trajet pour un angle d'incidence du rayon 51 de 45° et pour un angle d'incidence du rayon 52 de 20°. De haut en bas sur la figure 9, les différents matériaux considérés pour le prisme 11 sont le Germanium (Ge), le Silicium (Si), le Séléniure de Zinc (ZnSe), le Sulfure de Zinc (ZnS) et le saphir. L'utilisation d'un prisme 11 par exemple symétrique permet que le rayon transmis 61 ou 62 ressorte avec un angle $\alpha t$ égal à celui $\alpha i$ incident 51 ou 52.

La figure 9 montre également que la déviation introduite par chacun des deux prismes est indépendante de l'indice des matériaux utilisé, seul le décalage transverse des faisceaux sera affecté (mais est sans conséquence, étant donné l'application). On constate graphiquement que le parcours dans le matériaux varie un peu en fonction de l'angle d'incidence et du matériau (plus l'indice est élevé et plus le parcours semble être court), mais ces variations restent faibles et ne compensent pas la variation de chemin optique qui est essentiellement liée à la différence d'indice. Le fait que l'angle de déviation, quel que soit l'angle incident, est indépendant du matériau est lié au fait que le prisme est symétrique par rapport à la base. La condition de fonctionnement du biprisme pour que la déviation soit identique dans les deux prismes est que l'angle au sommet soit droit.

Le tableau 2 de la page suivante représente des exemples de couples de matériaux possibles. Les différence d'indice du couple sont indiquée dans la moitié supérieure du tableau 2, les différentes de coefficients de dilatation thermique étant indiquées dans la moitié inférieure.

Tableau 2

| | As$_2$S$_3$ | Itran 1 MgF$_2$ | Itran 2 ZnS | Itran 3 CaF$_2$ | Itran 4 ZnSe | Itran 5 Mg0 | Itran 6 CdfTe | Sc | SI | Ge | Saphir (Al$_2$O$_4$) | Quartz (SiO$_2$) |
|---|---|---|---|---|---|---|---|---|---|---|---|---|
| As$_2$S$_3$ | X | 1,06 | 0,17 | 1,01 | 0,02 | 0,73 | 0,27 | 0,07 | 1,02 | 1,67 | 0,69 | 0,91 |
| Itran 1 MgF$_2$ | 0,04 | X | 0,89 | 0,05 | 1,08 | 0,33 | 1,33 | 1,13 | 2,08 | 2,73 | 0,37 | 0,15 |
| Itran 2 ZnS | 0,04 | 0,01 | X | 0,84 | 0,19 | 0,56 | 0,44 | 0,24 | 1,19 | 1,84 | 0,52 | 0,74 |
| Itran 3 C aF$_2$ | 0,04 | 0,01 | 0,04 | x | 1,03 | 0.28 | 1,28 | 1,08 | 2,03 | 2,68 | 0,31 | 0,10 |
| Itran ZnSe | 0,05 | 0,01 | 0,00 | 0,03 | x | 0,75 | 0,25 | 0,05 | 1,00 | 1,65 | 0,71 | 0,93 |
| Itran 5 Mg0 | 0,04 | 0,00 | 0,01 | 0,03 | 0,01 | x | 1,00 | 0,80 | 1,75 | 2,40 | 0,04 | 0,18 |
| Itran 6 CdTe | 0,05 | 0,01 | 0,00 | 0,04 | 0,01 | 0,01 | X | 0,20 | 0,75 | 1,40 | 0,96 | 1,18 |
| Se | 0,03 | 0,07 | 0,08 | 0,05 | 0,08 | 0,07 | 0,09 | x | 0,95 | 1,60 | 0,76 | 0,98 |
| Si | 0,06 | 0,02 | 0,01 | 0,05 | 0,01 | 0,02 | 0,00 | 0,09 | x | 0,65 | 1,71 | 1,93 |
| Ge | 0,06 | 0,02 | 0,00 | 0,04 | 0,01 | 0,02 | 0,00 | 0,09 | 0,00 | x | 2,36 | 2,58 |
| Saphir (Al$_2$O$_3$) | 0,05 | 0,01 | 0,00 | 0,04 | 0,01 | 0,01 | 0,00 | 0,09 | 0,01 | 0,00 | x | 0,22 |
| Quartz (SiO$_2$) | 0,03 | 0,01 | 0,02 | 0,02 | 0,02 | 0,01 | 0,02 | 0,07 | 0,03 | 0,02 | 0,02 | x |

EP 1 856 552 B1

Pour une longueur de cohérence de la source 5 égale à 20 mm, et pour une prisme ayant des côtés de 50 mm, la condition de non cohérence entre les faisceau traversant chaque prisme est vérifiée dès que la différence d'indice du couple est sensiblement supérieure à 1. Cette valeur dépend évidemment de la longueur de cohérence de la source et des dimensions du prisme.

Il faut choisir ensuite des matériaux qui présentent des coefficients de dilatation thermique sensiblement égaux Cette condition est vérifiée dès que la différence de coefficients de dilatation du couple est sensiblement inférieure à 0.02, et plus préférentiellement inférieure à 0,01.

En prenant du Germanium pour l'un des prismes (indice n égal 4 à 4 $\mu$m), la condition sur l'indice est pratiquement toujours vérifiée, quel que soit l'autre matériau choisi. On peut donc choisir comme autre matériau du couple un matériau qui présente un coefficient de dilatation thermique proche de celui du Germanium.

Les couples préférés du tableau 2 sont donc :

- Silicium - ZnS;
- Silicium - Saphir;
- Germanium - ZnS; ou
- Germanium - ZnSe.

Avec de tels couples, la différence d'indicie est supérieure à 1.1. La différence d'allongement dans la plage d'utilisation de la tête est inférieure à 10 $\mu$m.

Il est également possible de prévoir des couples

- Germanium - CdTe; ou
- Germanium - Saphir.

Avec de tels couples, la différence d'indice est également supérieure à 1.1. La différence d'allongement dans la plage d'utilisation de la tête est inférieure à 2 $\mu$m.

Il est à noter que même le couple des matériaux les plus courants et les plus utilisés, à savoir le Germanium et le Silicium, peut convenir.

Les développements qui précèdent décrivent l'orientation de la tête en site. Pour pouvoir couvrir un espace angulaire au moins de 2$\pi$ stéradians, il faut disposer un autre axe de rotation de la tête.

Les figures 3 et 6 montrent que préférentiellement, un axe d'entrée du système est parallèle à la base du biprisme 10. L'axe d'entrée est confondu avec un axe de rotation AA passant par le centre géométrique du biprisme 10. L'axe AA est l'axe d'orientation en gisement et permet de fait tourner le prisme autour de l'axe d'entrée pour l'orientation du faisceau transmis 60 en gisement. En visée zénithale, l'axe AA est parallèle à la face 112. L'angle $\alpha$ de déflexion des rayons du faisceau 50 en gisement est le même que l'angle de rotation du prisme $\alpha$ en gisement autour de l'axe AA.

Pour permettre la rotation autour des deux axes AA et BB, le biprisme est monté sur deux supports 19 recouvrant les deux faces correspondant à la base du biprisme 10. Chaque support 19 est monté à rotation dans une tourche 15 comportant deux bras 16. Un moteur d'entraînement en rotation en site est décrit dans la suite de la présente description.

Les bras 16 de la fourche 15 comportent une liaison pivot avec les supports 19 afin de permettre une rotation du biprisme 10 autour de l'axe BB entre les bras de la fourche, comme le montrent les figures 6 et 7. L'axe principal de la fourche 15 est confondu avec l'axe AA, et est donc parallèle à la base du biprisme 10. Un moteur d'entraînement en rotation en gisement permet à l'ensemble de ce mécanisme d'être entraîné autour de l'axe AA.

Plusieurs modes de réalisation de moyen de déplacement du biprisme sont possibles.

Un premier mode de réalisation prévoit une patte 14 liée d'une part à un support 19 du biprisme par une liaison 141 est d'autre part à des moyens 135 sur lesquels peut glisser la patte 14. Dans ce mode de réalisation, un mouvement transmis par un moteur situé près des moyens 135 est transmis au biprisme 10 par l'intermédiaire de la patte 14.

Un deuxième mode de réalisation prévoit que l'orientation du biprisme 10 est donnée par un moteur en site situé sur l'axe BB. Ainsi, la patte 14 n'est plus nécessaire, ce qui simplifie le montage mécanique de la tête.

Les pièces mécaniques ont des inerties réduites et une motorisation approprié pour permettre une déplacement rapide du biprisme. Il n'y a pas de balourd dans le montage selon l'invention.

Les figures 6 et 7 montrent que le dispositif comporte un capot. 17 de protection du biprisme et du reste du dispositif. Le capot 17 a sensiblement une forme hémisphérique. Il comporte principalement un matériau 18 transparent aux rayons infrarouges émis ou reçus par le dispositif de poursuite et de contre-mesure. Le matériau 18 couvre un angle minimal de 180° en site sur le capot 17 selon un plan de symétrie du capot. Le capot 17 tourne en même temps que la fourche 15 en gisement. L'ensemble du dispositif est entraîné autour de l'axe AA pour assurer le balayage en gisement.

Le dispositif est apte à effectuer la poursuite d'un missile d'une part et d'autre part effectuer la contre-mesure du missile. Les phases de poursuite peuvent être successives ou intermittentes selon les applications et les menaces.

La figure 8 montre que pour avoir une couverture complète de l'espace, deux dispositifs selon l'invention peuvent être montés sur deux côtés opposés d'un aéronef 1. Les dispositifs selon l'invention sont très compacts et furtifs. Ils sont mécaniquement équilibrés - cas notamment du biprisme et de la tête - ce qui signifie qu'ils sont peu sensibles aux vibrations d'un moteur ou de pales d'un aéronef. La tête n'engendre pas elle-même de vibrations ni de déstabilisation de la ligne de visée.

On comprend que les développements qui précédant s'appliquent à des aéronefs militaires, par exemple des avions de transport ou des hélicoptères d'attaque et de transport Les menaces sont par exemple des missiles sol-air, air-air. Le cas multi menaces correspondant à un tir en salve de plusieurs missiles est également envisagé. Les développements qui précèdent peuvent également s'appliquer à des aéronefs civils, comme par exemple des avions long courrier, contre des menaces terroristes. On comprend également que les développements qui précèdent s'appliquent à d'autres types de véhicules, comme des chars ou des camions, mais également à des bâtiments civils ou militaires menacés par des missiles.

## Revendications

1. Dispositif de contre-mesure et de poursuite d'une menace sous la forme d'un missile (2) à autodirecteur, comportant une tête d'orientation apte à recevoir un faisceau (50) lumineux cohérent incident et à le dévier pour produire un faisceau (60) transmis, **caractérisé en ce que** la tête d'orientation comporte un biprisme (10) comportant deux prismes (11, 12) dans des matériaux différents et apte à diviser le faisceau transmis en deux sous faisceaux, la différence d'indice de réfraction entre les prismes (11, 12) étant apte à introduire une différence de chemin optique entre les deux sous faisceaux qui est supérieure à la longueur de cohérence du faisceau (50) incident.

2. Dispositif selon la revendication précédente, dans lequel les prismes (11, 12) ont une base triangle isocèle rectangle.

3. Dispositif selon l'une des revendications précédentes, dans lequel la différence d'indice de réfraction entre les prismes (11, 12) est sensiblement supérieure à 1.

4. Dispositif selon la revendication précédente, dans lequel le couple de matériaux pour les prismes (11, 12) est choisi parmi les couples Silicium - ZnS ou Silicium - Saphir ou Germanium - Sulfure de Zinc ou Germanium - Séléniure de Zinc ou Germanium - CdTe ou Germanium - Saphir.

5. Dispositif selon l'une des revendications précédentes, dans lequel la différence de coefficient de dilatation thermique entre les prismes (11, 12) est inférieure à 0.02.

6. Dispositif selon l'une des revendications précédentes, dans lequel la tête est montée en rotation en gisement autour d'un axe (AA) parallèle à la base du biprisme (10) et passant par le centre géométrique du biprisme.

7. Dispositif selon la revendication précédente, dans lequel un capot (17) de protection du biprisme est monté mobile en rotation en gisement.

8. Dispositif selon l'une des revendications précédentes, dans lequel le biprisme est monté en rotation en site autour d'un axe (BB) perpendiculaire à sa base et passant par son centre géométrique.

9. Dispositif selon la revendication précédente, dans lequel le biprisme est monté sur un support (19) mobile en rotation autour de l'axe (BB) de rotation en site dans une fourche (15).

10. Dispositif selon l'une des revendications précédentes, comportant une source (5) laser infrarouge de longueur de cohérence de l'ordre de grandeur du centimètre.

## Patentansprüche

1. Vorrichtung zur Gegenmaßnahme gegen und Verfolgung von einer Bedrohung in Form einer selbstzielenden Rakete (2) mit einem Orientierungskopf, der eingerichtet ist, einen einfallenden kohärenten Lichtstrahl (50) zu empfangen und diesen umzulenken, um einen weitergeleiteten Lichtstrahl (60) zu erzeugen, **dadurch gekennzeichnet, dass** der Orientierungskopf ein Doppelprisma (10) mit zwei Prismen (11, 12) aus unterschiedlichen Materialien aufweist und eingerichtet ist, den weitergeleiteten Lichtstrahl in zwei Unterlichtstrahlen aufzuteilen, wobei der Brechungsindexunterschied zwischen den Prismen (11, 12) eingerichtet ist, einen Unterschied des optischen Wegs zwischen den Unterlichtstrahlen einzuführen, welcher größer ist als die Kohärenzlänge des einfallenden Lichtstrahls (5).

2. Vorrichtung gemäß dem vorangehenden Anspruch, bei der die Prismen (11, 12) eine rechtwinklige, gleichschenklige Dreiecksbasis haben.

3. Vorrichtung gemäß einem der vorangehenden Ansprüche, bei der der Brechungsindexunterschied zwischen den Prismen (11, 12) etwa größer 1 ist.

4. Vorrichtung gemäß einem der vorangehenden Ansprüche, bei der die Materialpaarung für die Prismen (11, 12) aus den folgenden Materialpaaren ausgewählt ist: Silizium-ZnS oder Silizium-Saphir oder Germanium-Zinksulfit oder Germanium-Zinkselenit oder Germanium-CdTe oder Germanium-Saphir.

5. Vorrichtung gemäß einem der vorangehenden Ansprüche, bei der der Unterschied des Wärmeausdehnungskoeffizienten zwischen den Prismen (11, 12) kleiner als 0,02 ist.

6. Vorrichtung gemäß einem der vorangehenden Ansprüche, bei der der Kopf um eine Achse (AA) in azimutaler Richtung verdrehbar montiert ist, wobei die Achse parallel zu der Basis des Doppelprismas (10) ist und durch das geometrische Zentrum des Doppelprismas verläuft.

7. Vorrichtung gemäß einem der vorangehenden Ansprüche, bei der eine Schutzkappe (17) des Doppelprismas beweglich in azimutaler Richtung Verdrehbar befestigt ist.

8. Vorrichtung gemäß einem der vorangehenden Ansprüche, bei der das Doppelprismas um eine Achse (BB) örtlich verdrehbar ist, die senkrecht auf der Basis steht und durch ihr geometrisches Zentrum verläuft.

9. Vorrichtung gemäß einem der vorangehenden Ansprüche, bei der das Doppelprismas an einer Stützeinrichtung (19) örtlich drehbeweglich um die Achse (BB) in einer Gabel (15) befestigt ist.

10. Vorrichtung gemäß einem der vorangehenden Ansprüche, aufweisend eine Infrarotlaserquelle (5) mit einer Kohärenzlänge in der Größenordnung von Zentimetern.


**Claims**

1. A device for counter-measure and tracking of threats in the form of a homing-head missile (2), comprising an orientation head for receiving a coherent incident light beam (50) and deflecting it to produce a transmitted beam (60), **characterized in that** the orientation head comprises a biprism (10) including two prisms (11, 12) made of different materials and adapted for dividing the transmitted beam into two sub-beams, the refractive index difference between the prisms (11, 12) being adapted for introducing an optical path difference between the two sub-beams which is greater than the coherent length of the incident beam (50).

2. The device according to the previous claim, wherein the prisms (11, 12) have a right-angle isosceles triangle base.

3. The device according to one of the previous claims, wherein the difference in refraction index between the prisms (11, 12) is substantially greater than 1.

4. The device according to the previous claim, wherein the couple of materials for the prisms (11, 12) is selected from the couples of silicon - ZnS or silicon - sapphire or germanium - zinc sulphide or germanium - zinc selenide or germanium - CdTe or germanium - sapphire.

5. The device according to one of the previous claims, wherein the difference in thermal dilation coefficient between the prisms (11, 12) is less than 0.02.

6. The device according to one of the previous claims, wherein the head is mounted in bearing rotation about an axis (AA) parallel to the base of the biprism (10) and passing through the geometric centre of the biprism.

7. The device according to the previous claim, wherein a protective hood (17) of the biprism is rotably mounted in bearing.

8. The device according to one of the previous claims, wherein the biprism is rotatably mounted in elevation around an axis (BB) perpendicular to its base and passing through its geometric centre.

9. The device according to the previous claim, wherein the biprism is mounted on a support (19) rotatable about the axis (BB) of rotation in elevation in a fork (15).

10. The device according to one of the previous claims, comprising an infrared laser source (5) of coherent length of the order of magnitude of a centimetre.

FIG. 1

FIG. 2

FIG. 5C

FIG. 5D

FIG. 3A

FIG. 3B

FIG. 4

FIG. 5A

FIG. 5B

**FIG. 6**

**FIG. 7**

**FIG. 8**

FIG. 9

## RÉFÉRENCES CITÉES DANS LA DESCRIPTION

**Documents brevets cités dans la description**

• FR 2535467